# FASCICULE DE BREVET EUROPEEN

(11) **EP 1 595 725 B1**
(45) Date de publication et mention de la délivrance du brevet: **07.03.2007**
(21) Numéro de dépôt: 05291015.5
(22) Date de dépôt: 11.05.2005
(51) Int. Cl.: B60G 21/05, B60G 9/04

(54) **Train de véhicule de type semi-rigide à barre stabilisatrice au comportement homogène**
Fahrzeugachse vom Typ halbsteife Achse mit einem Stabilisatorstab und gleichartigen Eigenschaften
Vehicle axle of the semi-rigid type with a stabiliser bar having homogeneous characteristics

(30) Priorité: 14.05.2004 FR 0405302
(43) Date de publication de la demande: 16.11.2005
(73) Titulaire: Peugeot Citroën Automobiles S.A., 78140 Vélizy Villacoublay (FR)
(72) Inventeur: Sirot, Pierre, 92190 Meudon (FR); Pouillaude, Eric, 91400 Orsay (FR)
(74) Mandataire: Habasque, Etienne J. Jean-François

(56) Documents cités:
- EP-A- 0 458 665
- DE-A- 2 362 199
- DE-A- 2 627 665
- FR-A- 2 453 036
- US-A- 4 765 650
- PATENT ABSTRACTS OF JAPAN vol. 0112, no. 13 (M-605), 10 juillet 1987 (1987-07-10) & JP 62 029406 A (MAZDA MOTOR CORP), 7 février 1987 (1987-02-07)
- PATENT ABSTRACTS OF JAPAN vol. 1995, no. 01, 28 février 1995 (1995-02-28) & JP 06 286443 A (NISSAN SHATAI CO LTD), 11 octobre 1994 (1994-10-11)

## Description

La présente invention concerne un train de véhicule automobile de type semi-rigide à barre stabilisatrice.

Un tel train constitue le plus souvent un train arrière et comporte une traverse ayant un axe de direction transversale, aux extrémités de laquelle des roues sont montées rotatives.

Deux bras tirés relient la traverse à la caisse du véhicule. Chacun de ces bras a une première extrémité reliée à la caisse de manière pivotante autour d'un axe d'articulation respectif sensiblement parallèle à l'axe de la traverse et une seconde extrémité reliée à la traverse en l'un des deux points de liaison distants l'un de l'autre dans la direction de l'axe de la traverse.

Une barre oblique relie la caisse à la traverse et s'étend de façon oblique par rapport à la traverse portant les roues.

Une telle barre oblique est couramment désignée par le terme « barre Panhard » ou encore barre stabilisatrice.

Les documents EP 0 458 665 B et JP 62 029 406 décrivent de train de véhicule automobile de type semi-rigide à barre Panhard.

Par ailleurs, la traverse est également reliée à la caisse par le biais d'éléments élastiques, formés par exemple d'amortisseurs et de ressorts hélicoïdaux, assurant une fonction de suspension.

Dans un tel train de véhicule, la disposition des roues et les caractéristiques de la traverse ainsi que des éléments élastiques de suspension, permettent d'assurer le débattement des roues avec une bonne mobilité verticale ainsi qu'une fonction anti-dévers.

La barre stabilisatrice permet quant à elle la reprise des efforts transversaux exercés sur le train.

Le train formé de la traverse associée aux bras, à la barre stabilisatrice et aux éléments élastiques de suspension, est donc guidé dans son déplacement par rapport à la caisse par des bras et de la barre stabilisatrice reliée à la traverse et à la caisse en des points de liaison de leurs extrémités.

Cette architecture de train semi-rigide à barre stabilisatrice présente une bonne tenue aux efforts et un prix relativement faible, mais possède cependant un comportement dissymétrique en particulier lors des débattements verticaux de la suspension.

En effet, lors du débattement vertical du train, la traverse a tendance à se déplacer en rotation autour des axes d'articulation des bras tirés sur la caisse.

Cependant, la barre stabilisatrice impose également au point de liaison entre cette barre et la traverse, un mouvement de rotation autour de l'axe de l'articulation de la barre oblique sur la caisse qui est perpendiculaire à la barre et non parallèle à l'axe de la traverse.

Ce mouvement de rotation est appliqué de manière dissymétrique à une seule extrémité de la traverse, et entraîne une rotation générale de la traverse dans le plan de roulement, amenant une roue à s'approcher de l'axe longitudinal du véhicule, et l'autre à s'en éloigner.

Un tel comportement dissymétrique pose des problèmes de confort et de sécurité et est aggravé par l'importance du débattement vertical du train, notamment pour les véhicules utilitaires.

La présente invention a pour but de résoudre ces problèmes en définissant un train semi-rigide à barres stabilisatrices au comportement quasiment symétrique.

A cet effet, l'invention a pour objet un train de véhicule automobile, du type semi-rigide à barre stabilisatrice comprenant :
- une traverse ayant un axe de direction transversale aux extrémités axiales de laquelle une première et une seconde roues sont montées rotatives ;
- un premier et un second bras tirés reliant la traverse à la caisse du véhicule automobile ayant chacun une première extrémité reliée à la caisse de manière pivotante autour d'un axe d'articulation respectif parallèle à l'axe de la traverse et une seconde extrémité reliée à la traverse en l'un des deux points de liaison distants l'un de l'autre dans la direction de l'axe de la traverse ; et
- une barre oblique par rapport à la traverse la reliant à la caisse et ayant une première extrémité reliée à la traverse en un point de liaison plus éloigné, dans la direction de l'axe de la traverse, du point de liaison du second bras tiré avec la traverse que du point de liaison du premier bras tiré avec la traverse, et une seconde extrémité reliée à la caisse de manière pivotante autour d'un axe d'articulation incliné par rapport à l'axe de la traverse,
caractérisé en ce que l'axe d'articulation avec la caisse de l'extrémité du second bras tiré relié à la traverse en un point plus éloigné du point de fixation de la barre oblique, est décalé verticalement d'une valeur déterminée vers le bas par rapport à l'axe d'articulation du premier bras.

Il apparaît que grâce au décalage des axes d'articulation, des bras tirés sur la caisse, la dissymétrie générale du train est fortement diminuée et reste limitée dans toutes les situations fonctionnelles.

Selon d'autres caractéristiques de l'invention :
- ladite valeur déterminée du décalage vertical entre les axes d'articulation des bras sur la caisse, est comprise entre 5 et 20 millimètres ;
- ladite valeur déterminée du décalage vertical entre les axes d'articulation des bras sur la caisse, est de 10 millimètres.

L'invention sera mieux comprise à la lecture de la description qui va suivre, donnée uniquement à titre d'exemple et faite en se référant aux dessins annexés, sur lesquels :
- la Fig.1 est une vue schématique en perspective du train de l'invention ;
- la Fig.2A est une vue de dessus schématique du train de l'invention ;
- la Fig.2B est une vue de côté schématique du train de l'invention ; et
- la Fig.3 est un graphique représentant des relevés de performance comparatifs entre le train de l'invention et un train de référence selon l'art antérieur.

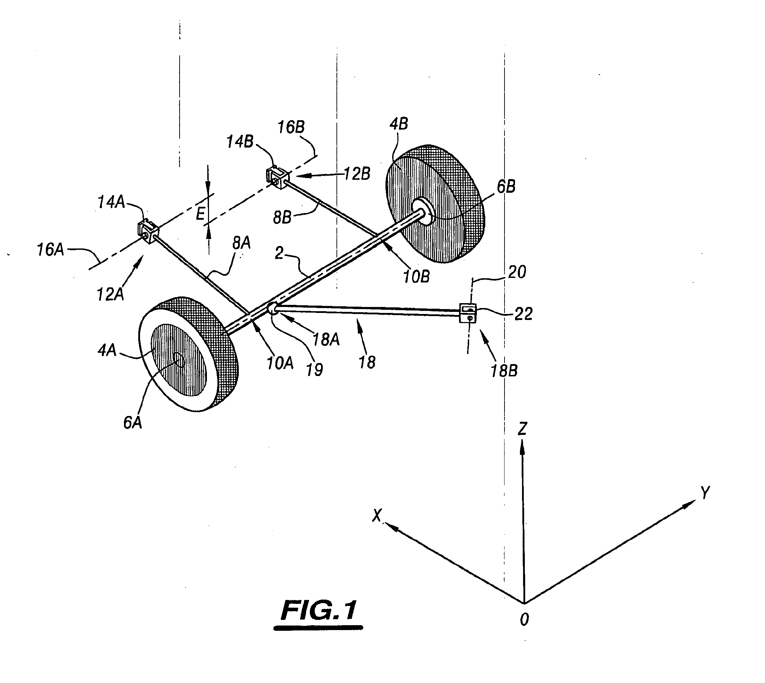

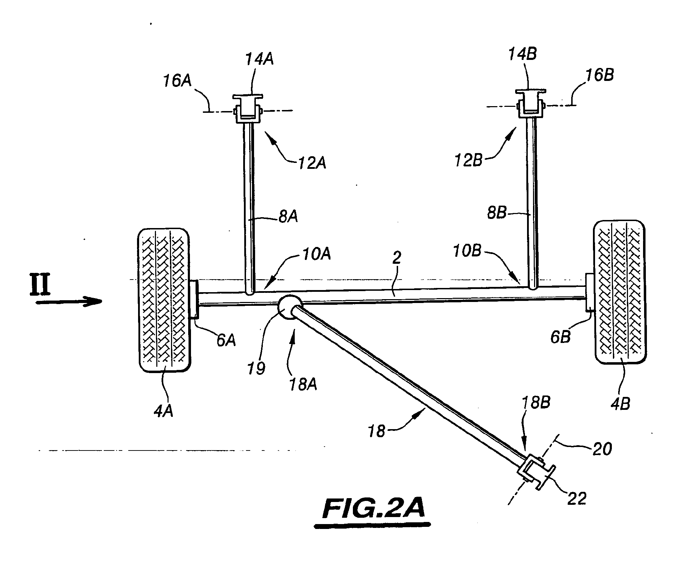

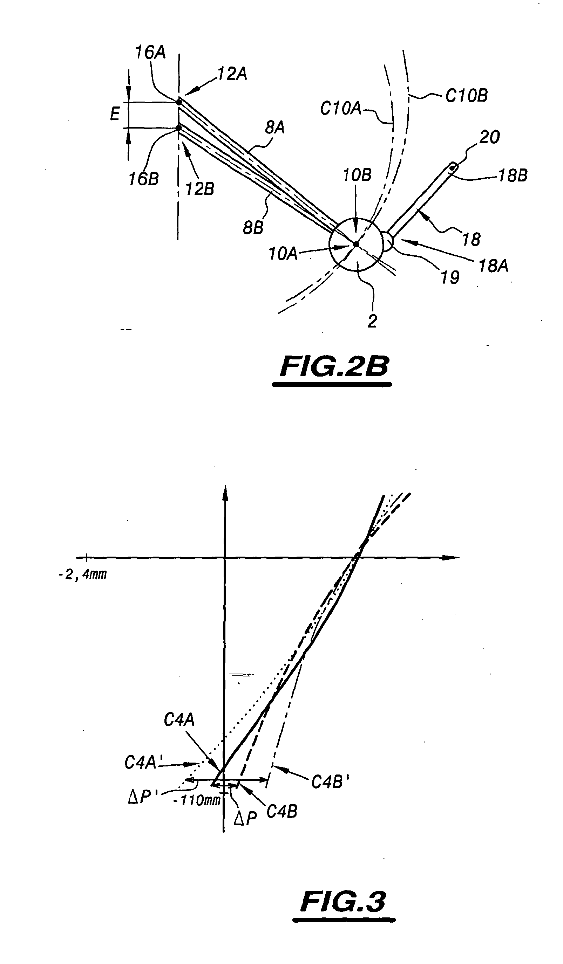

Sur la figure 1, on a représenté schématiquement et en perspective un train arrière selon l'invention tandis que les figures 2A et 2B sont respectivement des vues de dessus et de côté.

Le train comprend une traverse 2 qui s'étend selon un axe de direction transversal. Une première et une seconde roues 4A et 4B sont montées de manière rotative aux extrémités axiales de la traverse 2 par le biais des fusées 6A et 6B de manière classique.

On définit un repère orthonormé formé par un axe longitudinal OX et un axe transversal OY du véhicule dans un plan sur lequel reposent les roues 4A et 4B, correspondant au plan de roulement du véhicule automobile, et un axe vertical OZ perpendiculaire à ce plan.

L'axe OX correspond à l'axe longitudinal du véhicule et l'axe OY correspond à l'axe de la traverse 2.

Dans le mode de réalisation décrit, la traverse 2 est une traverse déformable qui comprend une partie centrale à section oblique de grande flexibilité en torsion et rigide en flexion. Elle porte à chaque extrémité les fusées 6A et 6B supportant respectivement les roues 4A et 4B.

La traverse 2 est solidaire, par exemple par soudage, d'un premier et d'un second bras tirés 8A et 8B, la reliant à la caisse du véhicule automobile. Les bras 8A et 8B sont reliés à la traverse 2 par leurs extrémités 10A et 10B, distantes l'une de l'autre dans la direction de la traverse 2.

Dans le mode de réalisation décrit, les bras 8A et 8B s'étendent dans un plan sensiblement horizontal, selon l'axe longitudinal et dans un sens leur permettant de s'opposer aux forces exercées sur les roues 4.

Les extrémités 12A et 12B des bras tirés 8A et 8B sont montées pivotantes sur la caisse du véhicule par l'intermédiaire d'articulations élastiques 14A et 14B, autour respectivement d'axes 16A et 16B parallèles à l'axe de la traverse 2.

Le train comporte également une barre oblique, dite barre stabilisatrice ou barre « Panhard » 18, ayant une première extrémité 18A reliée à la traverse 2 et une seconde extrémité 18B reliée à la caisse du véhicule. Le point de liaison de l'extrémité 18A de la barre 18 avec la traverse 2 est plus éloigné, selon la direction de la traverse 2, du point de liaison 10B du second bras 8B avec la traverse 2 que du point de liaison 10A du premier bras 8A avec la traverse 2.

Comme cela est représenté sur les figures 2A et 2B, la barre 18 est disposée de façon oblique par rapport à la traverse 2, dans un plan approximativement parallèle au plan de roulement. De plus, la barre 18 s'étend à l'opposé des bras 8A et 8B afin de compenser un phénomène connu sous le nom de braquage induit sous effort.

L'extrémité 18A de la barre 18 est reliée à la traverse 2 par une articulation 19, tandis que l'extrémité 18B est reliée à la caisse par une articulation 20 permettant un montage pivotant de la barre 18 autour d'un axe 22 sensiblement perpendiculaire à la barre 18 et non parallèle à l'axe de la traverse 2.

Par ailleurs, la suspension du train est assurée par des éléments élastiques de suspension formés par exemple d'amortisseurs et de ressorts hélicoïdaux permettant d'assurer le guidage vertical du train lors des mouvements de la suspension.

La disposition de la barre 18 est prévue pour optimiser les braquages induits. De plus, les positions verticales relatives de points de fixation des bras 8A, 8B, sur la caisse contribuant à réduire au maximum les mouvements latéraux du train.

Comme cela est représenté en référence aux figures 1 et 2B, dans le train de l'invention, l'axe 16B de l'articulation 14B permettant la fixation entre la caisse et le second bras 8B, c'est-à-dire le bras le plus éloigné du point de liaison 18A entre la traverse 2 et la barre oblique 18, est parallèle à l'axe 18A de l'articulation 14A de fixation du premier bras 8A sur la caisse, tout en étant décalé verticalement vers le bas, d'un décalage d'une valeur déterminée, notée E.

Les extrémités 12A et 12B des bras tirés 8A et 8B sont dans un même plan vertical mais dans deux plans différents, parallèles au plan de roulement et les deux bras tirés 8A et 8B, bien qu'étant tous deux sensiblement disposés à l'horizontal, ne sont pas coplanaires.

Le décalage vertical E entre les points de fixation des bras 8A et 8B avec la caisse est variable en fonction des paramètres du train.

Avantageusement, le décalage vertical E est compris entre 5 mm et 20 mm et préférentiellement, comme c'est le cas dans le mode de réalisation décrit, le décalage vertical E est fixé à 10 mm.

Le train de l'invention présente ainsi une dissymétrie volontaire quant à son accrochage sur la caisse. Lors des débattements de la suspension, la barre stabilisatrice 18 entraîne une action dissymétrique qui s'oppose et est partiellement compensée par la dissymétrie de l'accrochage du train sur la caisse.

Ainsi, comme cela est représenté en référence à la figure 2B, correspondant à une vue de côté du train selon la direction notée II, les bras 8A et 8B décrivent des arcs de cercle différents, centrés sur les axes d'articulation respectifs 16A et 16B.

Il apparaît donc que les trajectoires notées C10A et C10B, des points de liaison des extrémités 10A et 10B des bras 8A et 8B avec la traverse 2 sont différentes, ainsi que représenté sur cette figure 2B.

Sur la figure 3, on a représenté des relevés de performances comparatifs entre le train de l'invention tel que décrit en référence aux figures 1 et 2 et un train de référence selon l'art antérieur, réalisé de manière similaire mais dont les axes de fixation des bras sont alignés verticalement et transversalement.

Sur ce graphique, le battement vertical est porté en ordonnée et une mesure de l'angle formé par la roue avec l'axe du véhicule, ou angle de pince, convertie en distance par rapport au diamètre de la roue, est portée en abscisse.

Le débattement positif au-dessus de l'axe des abscisses est appelé débattement en compression tandis que le débattement négatif est appelé débattement en détente.

Sur le graphique 3, les courbes référencées C4A' et C4B' représentent l'évolution de l'angle formé par chacune des roues respectives du train de référence dont les bras de fixation sont disposés au même niveau et articulés suivant des axes alignés.

Les courbes C4A et C4B représentent l'évolution de l'angle formé par chacune des roues 4A et 4B du train suivant l'invention, avec l'axe longitudinal du véhicule.

Chaque paire de courbes comprend deux arcs de cercle de courbures opposées. Les courbes C4A' et C4B' du train de référence sont quasiment tangentes sur une partie du domaine, tandis que les courbes C4A et C4B se croisent deux fois.

Ainsi, les courbes de référence C4A' et C4B' présentent une zone dans laquelle elles sont pratiquement confondues, ce qui traduit un comportement sensiblement symétrique des deux roues dans cette partie du domaine de débattement en détente.

Cependant, à partir d'une valeur limite de débattement en détente, la dissymétrie s'accroît fortement pour atteindre une très forte dissymétrie ΔP' à 110 mm de débattement de suspension en détente.

L'angle formé par les roues avec l'axe longitudinal du véhicule évolue toujours dans le même sens, augmentant pour une roue et diminuant pour l'autre, de sorte que le train de référence est entraîné dans un mouvement de rotation unidirectionnel dans le plan de roulement.

A l'inverse, la situation respective des roues 4A et 4B du train de l'invention est inversée à chaque intersection des courbes C4A et C4B. La rotation du train dans le plan de roulement ne se fait donc pas toujours dans le même sens mais est inversée à chaque intersection, les angles que forment chacune des roues 4A et 4B évoluant de manière inversée en s'écartant, puis en se rapprochant de l'axe OX du véhicule.

Le train de l'invention présente un comportement dissymétrique sur toute la plage de fonctionnement sauf pour les débattements correspondant aux intersections des courbes C4A et C4B.

Toutefois, cette dissymétrie est réduite et est toujours inférieure à une valeur de seuil ΔP sur toute la plage de fonctionnement de sorte que l'amplitude maximale de la dissymétrie est fortement diminuée par rapport au train de référence.

Pour les deux paires de courbes, les paires de graphiques correspondant à la suspension en compression s'étendant au-dessus de l'axe des abscisses, présentent une faible dissymétrie témoignant d'un comportement sensiblement symétrique.

Du fait du décalage des points de fixation des bras sur la caisse, le train de l'invention présente donc un comportement dissymétrique sur la quasi-totalité du domaine de fonctionnement mais avec une dissymétrie réduite et limitée entraînant un comportement plus stable du véhicule soit plus symétrique dans l'ensemble.

Un tel agencement est par ailleurs très peu coûteux à réaliser. En effet, aucun élément n'est rajouté et seul le point de fixation d'un des bras tirés avec la caisse doit être déplacé.

En variante, le train est monté à l'opposé de celui décrit. La barre stabilisatrice 18 s'étend alors à partir d'un point de fixation avec la traverse 2, proche de l'extrémité 10B du bras tiré 8B et l'axe 16A de l'extrémité 12A du bras tiré 8A est placée au-dessus de l'axe 16B de l'extrémité 12B du bras tiré 8B.

Ces différentes solutions présentent les mêmes avantages que le train décrit à titre d'exemple.

## Revendications

1. Train de véhicule automobile, du type semi-rigide à barre Panhard (18) comprenant:
- une traverse (2) ayant un axe de direction transversale aux extrémités axiales (6A, 6B) de laquelle une première et une seconde roues (4A, 4B) sont montées rotatives ;
- un premier et un second bras tirés (8A, 8B) reliant la traverse (2) à la caisse du véhicule automobile ayant chacun une première extrémité (12A, 12B) reliée à la caisse de manière pivotante autour d'un axe d'articulation respectif (16A, 16B) parallèle à l'axe de la traverse (2) et une seconde extrémité reliée à la traverse (2) en l'un des deux points de liaison (10A, 10B) distants l'un de l'autre dans la direction de l'axe de la traverse (2) ; et
- une barre Panhard (18) montée oblique par rapport à la traverse (2) la reliant à la caisse et ayant une première extrémité (18A) reliée à la traverse (2) en un point de liaison plus éloigné, dans la direction de l'axe de la traverse (2), du point de liaison (10B) du second bras tiré (8B) avec la traverse (2) que du point de liaison (10A) du premier bras tiré (8A) avec la traverse (2), et une seconde extrémité (18B) reliée à la caisse de manière pivotante autour d'un axe d'articulation (22) incliné par rapports l'axe de la traverse (2),
**caractérisé en ce que** l'axe d'articulation (16B) avec la caisse de l'extrémité (12B) du second bras tiré (8B) relié à la traverse (2) en un point (10B) plus éloigné du point de fixation (18A) de la barre Panhard oblique (18), est décalé verticalement d'une valeur déterminée vers le bas par rapport à l'axe d'articulation (16A) du premier bras (8A).

2. Train selon la revendication 1, **caractérisé en ce que** ladite valeur déterminée (E) du décalage vertical entre les axes d'articulation (16A, 16B) des bras (8A, 8B) sur la caisse, est comprise entre 5 et 20 millimètres.

3. Train selon la revendication 2, **caractérisé en ce que** ladite valeur déterminée (E) du décalage vertical entre les axes d'articulation des bras (8A, 8B) sur la caisse, est de 10 millimètres.

## Claims

1. Motor vehicle suspension of the semi-rigid type with a Panhard rod (18) comprising:
- a cross-member (2) having an axis in a direction transverse to the axial extremities (6A, 6B) thereof on which a first and a second wheel (4A, 4B) are rotatably mounted;
- a first and a second trailing arm (8A, 8B) connecting the cross-member (2) to the body of the motor vehicle each having a first extremity (12A, 12B) connected to the body in such a way as to pivot about a respective hinge axis (16A, 16B) parallel to the axis of the cross-member (2) and a second extremity connected to the cross-member (2) at one of the two points of connection (10A, 10B) which are at a distance from each other in the direction of the axis of the cross-member (2); and
- a Panhard rod (18) mounted obliquely with respect to cross-member (2) connecting it to the body and having a first extremity (18A) connected to the cross-member (2) at a point of attachment which is further away in the direction of the axis of the cross-member (2) from the point of attachment (10B) of the second trailing arm (8B) with the cross-member (2) than the point of attachment (10A) of the first trailing arm (8A) with the cross-member (2), and a second extremity (18B) connected to the body in such a way as to pivot about a hinge axis (22) which is inclined in relation to the axis of the cross-member (2),
- **characterised in that** the hinge axis (16B) between the body and the extremity (12B) of the second trailing arm (8B) connected to the cross-member (2) at a point (10B) further from the point of attachment (18A) of the oblique Panhard rod (18) is vertically offset downwards by a specific amount in relation to the hinge axis (16A) of the first arm (8A).

2. Suspension according to claim 1, **characterised in that** the said specific value (E) of the vertical offset between the hinge axis (16A, 16B) of the arms (6A, 6B) on the body lies between 5 and 20 millimetres.

3. Suspension according to claim 2, **characterised in that** the said specific value (E) of the vertical offset between the hinge axis of the arms (8A, 8B) on the body is 10 millimetres.

## Patentansprüche

1. Fahrzeugachse vom Typ halbsteife Achse mit einem Panhard-Stab (18), enthaltend:
- einen Querträger (2) mit einer zu den Achsenden (6A, 6B) quergerichteten Achse, von der ein erstes und ein zweites Rad (4A, 4B) drehbar gelagert sind;
- einen ersten und einen zweiten Längslenker (8A, 8B), die den Querträger (2) mit der Fahrzeugkarosserie verbinden, die jeweils ein erstes Ende (12A, 12B) aufweisen, das mit der Karosserie um eine jeweilige, zur Achse des Querträgers (2) parallele Drehachse (16A, 16B) schwenkbar verbunden ist, und ein zweites Ende, das mit dem Querträger (2) in einem der beiden Verbindungspunkte (10A, 10B) verbunden ist, die in der Richtung der Achse des Querträgers (2) voneinander beabstandet sind; und
- einen Panhard-Stab (18), der relativ zu dem Querträger (2) schräg montiert ist, der ihn mit der Karosserie verbindet und ein erstes Ende (18A) aufweist, das mit dem Querträger (2) in einem Verbindungspunkt verbunden ist, der in der Richtung der Achse des Querträgers (2) vom Verbindungspunkt (10B) des zweiten Längslenkers (8B) mit dem Querträger (2) weiter entfernt ist als mit dem Verbindungspunkt (10A) des ersten Längslenkers (8A) mit dem Querträger (2), und ein zweites Ende (18B), das mit der Karosserie um eine Drehachse (22) schwenkbar verbunden ist, die relativ zu der Achse des Querträgers (2) geneigt ist,
**dadurch gekennzeichnet, dass** die Drehachse (16B) mit der Karosserie an dem Ende (12B) des zweiten Längslenkers (8B), der mit dem Querträger (2) in einem Punkt (10B) verbunden ist, der vom Befestigungspunkt (18A) des schrägen Panhard-Stabs (18) weiter entfernt ist, relativ zu der Drehachse (16A) des ersten Lenkers (8A) um einen vorgegebenen Wert senkrecht nach unten versetzt ist.

2. Achse entsprechend Anspruch 1,
**dadurch gekennzeichnet, dass** der vorgegebene Wert (E) für den senkrechten Versatz zwischen den Drehachsen (16A, 16B) der Lenker (16A, 16B) an der Karosserie zwischen 5 und 20 Millimetern beträgt.

3. Achse entsprechend Anspruch 2,
**dadurch gekennzeichnet, dass** der vorgegebene Wert (E) für den senkrechten Versatz zwischen den Drehachsen der Lenker (8A, 8B) an der Karosserie 10 Millimeter beträgt.
